# EUROPÄISCHE PATENTSCHRIFT

(11) **EP 2 624 945 B1**
(45) Veröffentlichungstag und Bekanntmachung des Hinweises auf die Patenterteilung: **27.09.2017**
(21) Anmeldenummer: 11764690.1
(22) Anmeldetag: 04.10.2011
(51) Int. Cl.: B01F 15/06, C12C 7/06, C12C 13/02, C12C 13/08, C12M 1/06, F28D 1/06, B01F 5/10, B01F 7/22, C12C 7/04, C12C 7/22, F28F 3/14, B01F 7/16

(54) **VORRICHTUNG UND VERFAHREN ZUM ERWÄRMEN EINES FLÜSSIGEN MEDIUMS, INSBESONDERE MAISCHVORRICHTUNG ZUM HERSTELLEN VON BIER**
APPARATUS AND PROCESS FOR HEATING A LIQUID MEDIUM, ESPECIALLY MASH APPARATUS FOR PRODUCTION OF BEER
DISPOSITIF ET PROCÉDÉ POUR CHAUFFER UNE SUBSTANCE LIQUIDE, NOTAMMENT DISPOSITIF D'EMPÂTAGE POUR PRODUIRE DE LA BIÈRE

(30) Priorität: 04.10.2010 DE 102010041954
(43) Veröffentlichungstag der Anmeldung: 14.08.2013
(73) Patentinhaber: Krones AG, 93073 Neutraubling (DE)
(72) Erfinder: KAMMERLOHER, Helmut, 93073 Neutraubling (DE)
(74) Vertreter: Grünecker Patent- und Rechtsanwälte PartG mbB
(86) Internationale Anmeldenummer: PCT/EP2011/004946
(87) Internationale Veröffentlichungsnummer: WO 2012/045441

(56) Entgegenhaltungen:
- EP-A2- 1 264 876
- US-A- 3 384 163
- US-A1- 2009 134 173
- US-A1- 2009 207 689

## Beschreibung

Die Erfindung betrifft ein Verfahren und eine Vorrichtung zum Erwärmen eines flüssigen Mediums, insbesondere einer Maischvorrichtung zum Herstellen von Bier.

Ein wichtiger Prozessschritt zur Herstellung von Bier ist das Maischen. Beim Maischen werden Schrot und Wasser miteinander vermischt und dabei die Inhaltsstoffe des Malzes in Lösung gebracht. Zur Herstellung von Würze mit einer hohen Konzentration (high-gravity-Verfahren) kommen hochviskose Maischen, sog. Dickmaischen, zum Einsatz. Derzeit ist die Maischearbeit im Maischebottich ab einer Konzentration, die eine 22%ige Vorderwürze ergibt (ohne Enzyme) bzw. eine 24%ige Vorderwürze ergibt (mit Enzymen), oft nur eingeschränkt möglich. Dies kann sich auch auf alle folgenden Prozesse negativ auswirken, die dann entweder nur noch eingeschränkt oder aber überhaupt nicht mehr funktionieren.

Ein Grund hierfür ist beispielsweise die viskositätsbedingte Erniedrigung des Wärmeübergangskoeffizienten. Für einen hohen Wärmestrom ist aber ein hoher Wärmedurchgangskoeffizient oder eine größere Heizfläche nötig, welche aber nur schwer zu beeinflussen bzw. limitiert sind. Mit einer erhöhten Heizmitteltemperatur könnte zwar der Wärmestrom auch erhöht werden, aber hierdurch erhöht sich auch die Grenzschichttemperatur, wodurch u. a. die Enzyme geschädigt werden. Außerdem können auch das Fouling und die temperaturbedingten Verluste stark zunehmen wodurch der Primärenergiebedarf steigt. Ebenfalls erhöht sich der Reinigungsaufwand.

Ein weiterer Grund ist die verringerte Enzymaktivität. In der Dickmaische können z. B. Gaseinschlüsse länger verweilen und damit eine Art Barriere zwischen Enzymen und Substrat bilden. Zusätzlich behindert die erhöhte Viskosität der Maische die Beweglichkeit und Arbeit der Enzyme, so dass die vorgegebenen Rasten oft nicht mehr zum gewünschten Resultat führen.

Ein dritter Grund kann eine inhomogene Maische sein, die sich z. B. infolge gasbedingter Dichteunterschiede und der daraus resultierenden Entmischung der Maische ergibt. Hierbei streben die gasbehafteten und leichteren Maischeteilchen stärker an die Spiegeloberfläche, was durch den bodennahen Einbauort von Rührwerken oft nicht ausreichend verhindert werden kann. Diese Maischeteilchen befinden sich dann unter Umständen weniger lang im Temperaturoptimum der Enzyme was zum Beispiel zu Extraktverlusten führen kann.

Derzeit werden die Heizflächen von Heizapparaten mit Rührwerken, z. B. Maischvorrichtungen, meist mit Hochdruckheißwasser betrieben, dabei werden die Heizflächen horizontal/von unten durchströmt. Das heißt, das Wärmeträgermedium fließt ähnlich einem Gleichstromwärmetauscher mit dem gerührten Produkt horizontal/von unten. Der Wärmestrom ist hierbei bei flüssigen Wärmeträgermedien nicht optimal. US 3 384 163 A beschreibt einen Behälter mit Innenkocher, der mehrere Abschnitte aufweist, wobei das Heizmedium in den einzeln Abschnitten über eine Rohrleitung jeweils im oberen Bereich zugeführt wird und im unteren Bereich abläuft.

US 2009/207689 beschreibt einen Behälter, der zu Heizzwecken doppelwandig ausgebildet ist. Verschiedene Zuläufe führen das Heizmedium in den Zwischenraum. Hiervon ausgehend liegt der vorliegenden Erfindung die Aufgabe zugrunde, ein verbessertes Verfahren insbesondere zum Maischen und eine entsprechende Vorrichtung, insbesondere für Dickmaischen, bereitzustellen, die ein schonendes und energiesparendes Aufheizen der Maische bei Erhöhung des Wärmestroms ermöglichen.

Erfindungsgemäß wird diese Aufgabe durch die Merkmale der Ansprüche 1 und 9 gelöst. Bevorzugte Ausführungsbeispiele ergeben sich aus den Unteransprüchen.

Gemäß der vorliegenden Erfindung ist also die Heizung derart ausgebildet, dass das Heizmedium zumindest abschnittsweise derart in der Heizung geführt wird, dass es entgegen einer an der Heizfläche erzeugten Grundströmung innerhalb des flüssigen Mediums, insbesondere von oben nach unten fließt, und/oder oberhalb des flüssigen Mediums, insbesondere von unten nach oben fließt. Die Grundströmung innerhalb der Maische wird insbesondere durch ein Rührwerk erzeugt.

Durch das Vorsehen des Rührwerks ergibt sich z. B. folgende Bewegung des flüssigen Mediums. Durch den vom Rührer bedingten Auftrieb und durch den thermischen Auftrieb strebt das flüssige Medium an der Heizfläche oder aber im Fall einer Zargenheizung, an der Innenfläche der Behälterwandung nach oben. Teilchen mit einer niedrigen Dichte streben stärker nach oben und können dort aufschwimmen. Die meisten Teilchen wandern an der Heizfläche spiralförmig in den oberen Flüssigkeitsbereich, dann in Richtung Zentrum und von da wieder nach unten, wobei ein Teil des flüssigen Mediums dann durch einen Ablauf, vorzugsweise in einem unteren mittleren Bereich (z.B. im Zentrum des Bodens), abgepumpt werden kann, und gegebenenfalls im Kreislauf erneut zugeführt werden kann. Somit ergibt sich an der Heizfläche eine Grundströmung des flüssigen Mediums im Wesentlichen von unten nach oben.

Somit wird das Heizmedium im Gegenstrom geführt und man erreicht auch mit relativ niedrigen Temperaturdifferenzen zwischen Heizmedium und zu erhitzendem Medium und relativ kleinen Heizflächen ausreichend hohe Wärmeströme und Produkttemperaturen, Somit kann die Temperatur des Heizmediums herabgesetzt werden, was zu einer besonders schonenden Erwärmung führt. Der Zulauf für das Heizmedium ist als durchgehende oder in Abschnitte unterteilte Ringleitung ausgebildet und hat mehrere oder eine durchgehende Öffnung, durch die das Heizmedium in die Heizung fließt. Auch der mindestens eine Ablauf kann entsprechend als durchgehende und/oder in Abschnitte unterteilte Ringleitung ausgebildet sein. Dadurch, dass der Zulauf sich ringförmig um die Heizung bzw. Heizfläche erstreckt, ist eine gleichmäßige Durchströmung um den Umfang der Heizung von oben nach unten und somit eine gleichmäßige Erwärmung des flüssigen Mediums gewährleistet. Die Heizung kann dabei eine ringförmige Heizfläche aufweisen oder mehrere ringförmig angeordnete Abschnitte aufweisen.

Es ist vorteilhaft, wenn ein Ablauf im oberen Bereich der Heizung und ein weiterer Ablauf in einem unteren Bereich der Heizung und der Zulauf dann dazwischen angeordnet ist. Somit kann das Heizmedium in einem unteren Abschnitt von oben nach unten fließen und in einem oberen Abschnitt von unten nach oben fließen. Dies bringt den Vorteil mit sich, dass in einem oberen Abschnitt der Heizung das Heizmedium ebenfalls im Gegenstrom - und zwar zu einem herabfließenden flüssigen Medium, das an der Heizfläche entlang hinunter bis zu einer Spiegeloberfläche fließt - strömen kann. Auch im unteren Bereich, in dem das flüssige Medium sich an der Heizfläche z. B. durch die Wirkung des Rührers nach oben bewegt, fließt dann das Heizmedium im Gegenstrom nach unten, was sowohl im oberen als auch im unteren Abschnitt den Wärmestrom deutlich verbessern kann.

Vorteilhafterweise ist dann der Zulauf für das Heizmedium auf einer Höhe angeordnet, die unterhalb des Zulaufs für das flüssige Medium liegt, besonders vorteilhaft in einem Bereich des maximalen Pegels bzw. der Spiegelfläche des flüssigen Mediums, bzw. dem biersortenabhängigen maximalen Pegel bzw. der Spiegelfläche des jeweiligen flüssigen Mediums. Unter Bereich versteht man hier Pegelhöhe + / - 30 % der Pegelhöhe. Dazu kann beispielsweise die Vorrichtung eine Steuereinrichtung aufweisen, die den maximalen Füllstand bzw. die Spiegeloberfläche für eine Biersorte bzw. den entsprechenden Prozessabschnitt festlegt.

Vorteilhafterweise ist dann der Zulauf für das flüssige Medium in einem oberen Bereich der Heizung angeordnet und umfasst eine Verteilereinrichtung, die das flüssige Medium oberhalb der Spiegeloberfläche des flüssigen Mediums auf eine Heizfläche aufbringt, derart, dass das flüssige Medium über die Heizfläche bis zur Spiegeloberfläche herabläuft. Gemäß diesem Ausführungsbeispiel erstreckt sich nun die Heizfläche über die Spiegeloberfläche des flüssigen Mediums nach oben. Die volumenunabhängige Heizflächenvergrößerung reduziert somit z. B. die Problematik der viskositätsbedingten Erniedrigung des Wärmeübergangs z. B. bei höher konzentrierten Maischen und während der Verkleisterungsphase.

Dadurch, dass das flüssige Medium in einem dünnen Film über die Heizfläche nach unten fließt, können sich die oberflächennahen Gasblasen aufgrund der Temperaturerhöhung schlagartig bzw. sehr schnell vergrößern und ausgetrieben werden. Durch das Entgasen von z. B. der Maische können gasbedingte Dichtunterschiede der Maische wesentlich reduziert werden und die Enzymaktivität wie oben beschrieben bei Dickmaischen erhöht werden. Dadurch, dass die Maische über die Heizfläche geleitet wird, können auch weitere unerwünschte flüchtige Substanzen, wie beispielsweise Dimethylsulfid (DMS), schon aus der Maische ausgetrieben werden. DMS ist eine schwefelhaltige, organische Verbindung, die einen Fehlgeschmack im Bier verursacht. DMS entsteht aus den beim Mälzen gebildeten Vorläufern S-Methylmethionin (SMM) und Dimethylsulfoxid (DMSO).

Dadurch, dass das flüssige Medium zusätzlich erwärmt wird, indem es über die Heizfläche geleitet wird, kann die Temperatur des Heizmediums reduziert werden. Somit ist ein schonenderes Aufheizen des Mediums möglich. Dadurch, dass keine hohen Heizmediumtemperaturen notwendig sind, kann beispielsweise auch Wärmeenergie aus einer Wärmerückgewinnung verwendet werden, d. h. dass Abwärme anderer Prozessschritte (z. B. Warmwasser, das bei der Würzekühlung entsteht) sinnvoll zum Erwärmen des Heizmediums und somit zum Heizen des Mediums, z. B. der Maische, verwendet werden kann, so dass der Einsatz von Primärenergie zum Aufheizen der Maische verhindert oder zumindest wesentlich reduziert werden kann. Die reduzierte Heizmedientemperatur, sowie z. B. der mögliche Einsatz von hochkonzentrierten Maischen bringt somit eine wesentliche Energieeinsparung mit sich. Durch die Verwendung von Heizmedium aus Wärmerückgewinnung kann die Heizflächenwandung kostengünstiger angefertigt werden. Durch z. B. eine dünnere Heizflächenwandung kann wiederum der Wärmedurchgang verbessert werden.

Ein weiterer Vorteil ist, dass sich aufgrund der neuartigen Führung eine verbesserte Gesamtdurchmischung ergibt, insbesondere auch bei großen Bottichdurchmessern und hohen Füllständen.

Durch die Aufbringung z. B. der Maische auf die Heizfläche, die sich oberhalb der Spiegeloberfläche erstreckt, erhöht sich der Volumenstrom an der Maischeoberfläche insbesondere bei hohen Füllständen, was wiederum den manchmal entstehenden, dichtebedingten Maischeteppich an der Spiegeloberfläche reduziert und somit wiederum eine bessere Enzymtätigkeit und Umsetzung der Stärke in der Maische zur Folge hat.

Ein weiterer Vorteil liegt darin, dass die Maische unabhängig von der Maischemenge von ein und derselben Vorrichtung optimal aufgeheizt werden kann. Man braucht keine spezifischen und biersortenabhängigen Unterteilungen mehr für die Heizzarge, was deutlich Kosten und Klärungsaufwand bei der Konstruktion erspart. Auch neue Sorten mit stark variierenden Maischemengen können mit diesem System gut aufgeheizt werden (große Flexibilitätserhöhung für die Brauerei). Selbst "Mikro"-Teilmaischemengen und/oder "Mikro"-Maischemengen können zuverlässig und gleichmäßig aufgeheizt werden. Für solche Fälle wäre dann kein zusätzlicher Heizboden mehr nötig, da die "Mikro"- Teilmaischemengen und/oder "Mikro"-Maischemengen erwärmt werden, indem sie über die Heizfläche herablaufen.

Außerdem ermöglicht diese Verfahrensweise den Bau von schlankeren und günstigeren Gefäßen (mit Füllständen von z. B. 3 bis 5 m und Gefäßhöhen von 5 bis 8 m). Dies wiederum ermöglicht ein sehr gutes Flächen/Volumenverhältnis (AN-Verhältnis) des Bottichs, womit sich die Abstrahlverluste reduzieren.

Gemäß einem bevorzugten Ausführungsbeispiel weist die nach innen gewandte Heizfläche der Heizung eine Vielzahl von Unebenheiten auf, insbesondere eine Vielzahl von nebeneinander und übereinander angeordneten gewölbten Taschen, die miteinander an einer Verbindungsstelle (z. B. Schweißstelle zwischen innerer Heizfläche und äußerer Wandung), in Verbindung stehen und durch die das Heizmedium fließt. Somit kann der Wärmeübergang verbessert werden. Vorzugsweise ist die Heizung dabei derart ausgebildet und angeordnet, dass in Flussrichtung des Heizmediums und/oder des flüssigen Mediums einer gewölbten Tasche eine Verbindungsstelle folgt. Somit kann der Wärmeübergang auf der Heizmittelseite und damit der k-Wert erhöht werden.

Es ist besonders vorteilhaft, dass die Heizfläche mit einem Heizmedium, das eine Temperatur, bevorzugt unter seiner Kochtemperatur aufweist, beheizt werden kann. Vorteilhafterweise liegt die Temperatur des Heizmediums 10 bis 30 K über der jeweiligen Produkttemperatur, d.h. hier der Maische, bzw. des Mediums in der Vorrichtung. Die Reduzierung der Temperatur, d. h. das schonende Aufheizen, verringert Fouling, schont die Enzyme und spart wie zuvor erläutert Energie. Durch die Temperaturabsenkung des Heizmediums kann die Häufigkeit und oder Intensität der CIP-Reinigungen im Maischbottich reduziert werden, was wiederum Wasser, Energie und Reinigungsmittel erspart.

Vorteilhafterweise wird das flüssige Medium aus einem unteren mittleren Bereich des Behälters abgepumpt und im Kreislauf dem Behälter rückgeführt.

Vorteilhafterweise kann dann z. B. die Maische im Bottichzentrum mit der schon vorhandenen Maischepumpe abgepumpt werden und dann zu der Verteilereinrichtung nach oben gepumpt werden, so dass keine zusätzliche Pumpe benötigt wird. Durch die Zugabe des umgepumpten Mediums, d. h. der Maische, von oben verbessert sich also die Durchmischung der Maische in den obersten Flüssigkeitsschichten relativ unabhängig vom Maischefüllstand.

Die Erfindung ermöglicht niedrige Vorlauftemperaturen des Heizmediums. Die Vorlauftemperatur kann etwa im Bereich der Siedetemperatur des Heizmediums liegen oder kleiner sein. Im Bereich bedeutet hier Schwankungen der Siedetemperatur um 5 %. Das Heizmedium ist also flüssig und bevorzugt Wasser, dessen Temperatur nahe der jeweiligen Produkttemperatur und max. im Bereich der Siedetemperatur des Heizmediums unter Normaldruck liegt. Vollständigkeitshalber sei hier auch darauf hingewiesen, dass das Heizmedium auch Hochdruckheißwasser sein kann. Hierbei handelt es sich auch um ein flüssiges Heizmedium, dessen Temperatur jedoch weit über denen von flüssigem Wasser nahe der Kochtemperatur unter Normaldruck liegt.

Die Vorrichtung und die Heizung sind also insbesondere ausgelegt für die Verwendung von flüssigen Heizmedien, d. h. dass eine Vorrichtung eine Steuerung umfasst, die Prozesse, insbesondere Maischprozesse unter Verwendung von flüssigen Heizmedien mit den entsprechenden Temperaturen, Heizmediendrücken und Prozesszeiten fährt. Ebenso sind die Leitungen für die Heizmedienzufuhr, sowie eine Heizmedienpumpe für flüssiges Heizmedium ausgelegt. Bei Dampf gibt es eine "große" Zuführleitung und eine "kleine" Kondensatableitung. Bei flüssigem Heizmedium (z.B. HDHW) sind die Vor- und Rücklaufleitungen hingegen etwa gleich groß. Bei der Versorgung mit Dampf kann die Temperatur in der Heizfläche über ein Druckventil individuell vor der Gefäßheizung eingestellt werden. Bei flüssigem Heizmedium ist dies nicht möglich, hier kann man lediglich Wasser, z.B. aus dem Rücklauf, beimischen.

In jedem Fall verbessert sich der Wärmestrom, wenn die Heizflächen nahezu senkrecht von oben nach unten durchströmt werden, dies führt auch zu niedrigeren Rücklauftemperaturen. Im Energiespeicher lagert sich also Wärmeträgermedium weit unter den üblichen 80 °C ein und die *Größe* des Energiespeichertanks und damit auch die Speicherkosten können erheblich reduziert werden. Niedrige Rücklauftemperaturen sind günstig in der Auslegung des Energiespeichertanks und dessen Beladung. Der Energiespeichertank kann aus einem Pfannendunstkondensator und/oder einem Würzekühler mit Energie gespeist werden. Wird der Energiespeichertank sowohl aus einem Würzekühler als auch einem Pfannendunstkondensator gespeist, so wird dennoch bevorzugt die zurückgewonnene Energie vom Würzekühler zur Maischebeheizung, die zurückgewonnene Energie vom Pfannendunstkondensator zur Läuterwürzeerhitzung in einem Läuterwürzeerhitzer verwendet. Es ergeben sich somit im Prinzip zwei unabhängige Energiekreisläufe mit der gemeinsamen Schnittstelle im Energiespeichertank. Der Energiespeichertank fungiert lediglich als Puffergefäß. Die beim jeweiligen Prozessschritt zurückgewonnene Energie könnte auch direkt dem jeweiligen Wärmeverbraucher zugeführt werden. Da jedoch Energierückgewinnung und Energieabgabe nicht immer gleichzeitig ablaufen wird dieses Puffergefäß benötigt.

Die zuvor beschriebene Vorrichtung ist insbesondere zum Erwärmen von Maische geeignet. Die Vorrichtung ist jedoch gleichermaßen ebenfalls zum Erwärmen anderer flüssiger Medien, insbesondere von Würze, geeignet.

Die vorliegende Erfindung wird nachfolgend unter Bezugnahme der folgenden Figuren näher erläutert.
- Fig. 1: zeigt schematisch einen Aufriss einer Vorrichtung gemäß einem ersten Ausführungsbeispiel der vorliegenden Erfindung.
- Fig. 2: zeigt schematisch einen Aufriss einer zweiten Ausführungsform gemäß der vorliegenden Erfindung.
- Fig. 3: zeigt eine perspektivische Darstellung der Heizfläche der erfindungsgemäßen Vorrichtung,
- Fig. 4: zeigt einen Teillängsschnitt durch die erfindungsgemäße Heizung.
- Fig. 5: zeigt einen Querschnitt durch die Heizung.
- Fig. 6: zeigt eine weitere Ausführungsform gemäß der vorliegenden Erfindung.

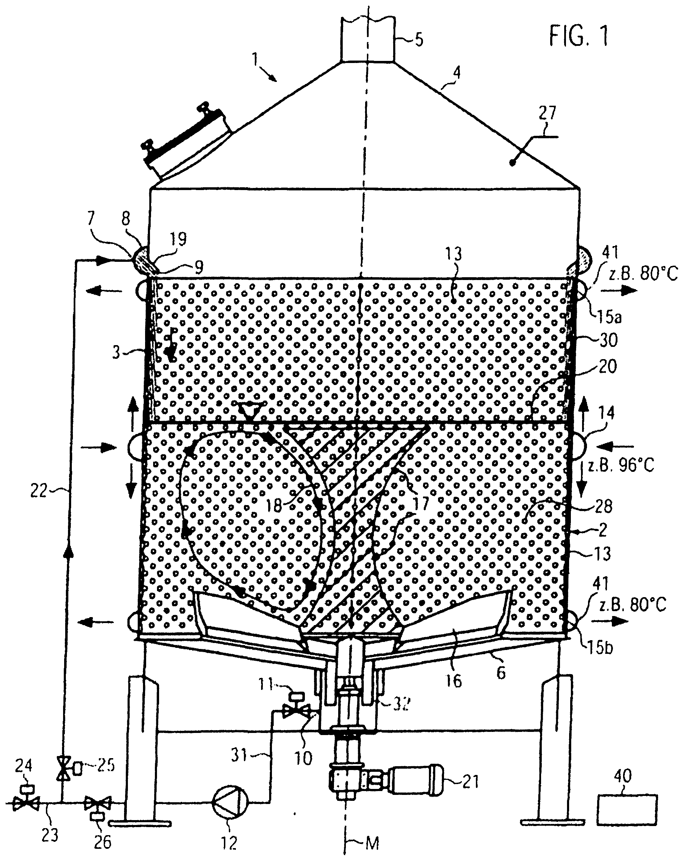

Fig. 1 zeigt eine Vorrichtung gemäß einer ersten Ausführungsform der vorliegenden Erfindung. Die in Fig. 1 gezeigte Vorrichtung ist geeignet zum Maischen bei der Herstellung von Bier.

Die vorliegende Erfindung wird hier im Zusammenhang mit Maische näher erläutert, ist jedoch genauso gut für andere Flüssigkeiten, wie z. B. Würze, geeignet.

Die Vorrichtung 1 umfasst einen Behälter 2, dessen Seitenwandung 3 vorzugsweise hohlzylindrisch ausgebildet ist. Der Behälter 2 weist eine Haube oder einen Deckel 4 auf, in dem ein Dunstrohr 5 für flüchtige Bestandteile vorgesehen ist. Auch wenn hier nicht dargestellt, kann der Behälter 2 mit einer Energierückgewinnungseinrichtung verbunden sein. Am unteren Ende umfasst der Behälter einen Boden 6, der sich vorzugsweise konisch nach unten verjüngt. In der Mitte des Bodens ist ein Ablauf 10 hier in Form einer Auslaufschüssel vorgesehen, die mit einer Ablaufleitung 31 verbunden ist. In der Ablaufleitung 31 befindet sich ein Stellventil 11. Ferner ist in der Ablaufleitung eine Pumpe 12 vorgesehen zum Abpumpen der Maische oder eines Teils der Maische. Die Maische kann beispielsweise nach dem Maischvorgang über die Leitung 23 bei geöffneten Ventilen 24 und 26 abgeleitet werden. Bei geschlossenem Ventil 24 und geöffneten Ventilen 25 und 26 kann die Maische, wie auch nachfolgend noch näher erläutert wird, über die Zuführleitung 22 zu einer Verteilereinrichtung 8, die sich sowohl außerhalb, als auch innerhalb des Gefäßes befinden kann, geleitet werden.

Weiter befindet sich im unteren Bereich der Vorrichtung, hier in der Mitte des Bottichbodens,
ein Rührwerk. Das Rührwerk umfasst einen Motor 21» eine Antriebswelle, sowie Rührflügel 16. In der Auslaufschüssel können Rührblätter 32 vorgesehen sein.

Weiter umfasst die Vorrichtung auch einen Zulauf 7 für Maische. Das Einlagern der Maische kann über die Leitungen 23 und 22 und die Verteilereinrichtung 8 von oben erfolgen. Es ist jedoch auch möglich, die Maische der Vorrichtung 1 über einen nicht dargestellten Zulauf in einem unteren Bereich, beispielsweise im Boden bzw. in der Auslaufschüssel 10, zuzuführen. In einer besonders günstigen Ausführung sind in der Zuführleitung 22 Dosageeinrichtungen zum Beispiel für Enzyme, Calciumsulfat oder Calciumchlorid vorgesehen, durch diese Art der Dosage kann eine gleichmäßige und homogene Dosierung der Zusätze erreicht werden.

An der Seitenwandung 3 des Behälters 2 ist zumindest über einen Teil der Höhe eine vorzugsweise im Wesentlichen hohlzylindrische Heizung 30 vorgesehen, die nach dem Gegenstrom-Wärmetauscherprinzip arbeitet. Bei dieser Ausführungsform ist die Heizung als Wand (Zargenheizung) ausgebildet, durch die ein Heizmedium fließt, Die Heizung kann jedoch auch beabstandet oder anliegend an die Seitenwandung 3 angeordnet sein. Die Heizung kann auch durch mehrere, in Umfangsrichtung nebeneinander angeordnete Teilabschnitte gebildet sein.

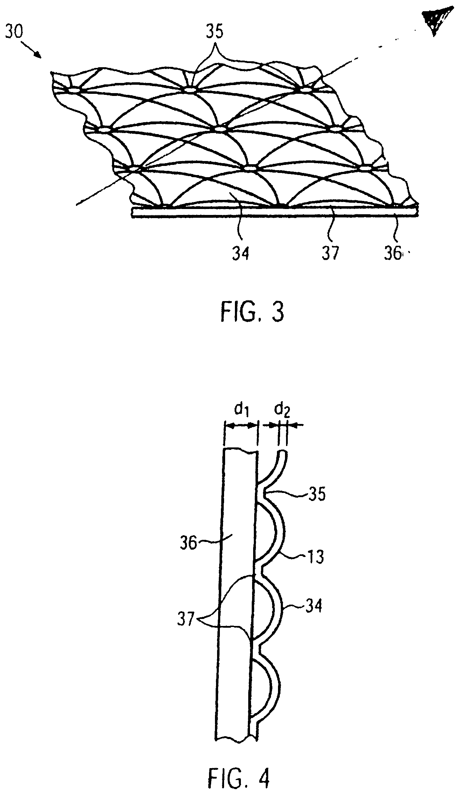

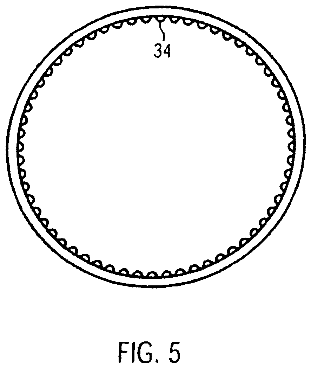

Die Heizung 30 ist vorzugsweise wie in den Fig. 3 bis 5 dargestellt, ausgebildet. Hier ist die Seitenwandung zumindest abschnittsweise doppelwandig ausgebildet und weist eine Außenwandung 36 und eine Innenwand, also Heizfläche 13, auf, wobei die Stärke d1 der Außenwand stärker ist als die Stärke d2 der Innenwand. Die beiden Wandungen sind miteinander an einer Vielzahl von Verbindungsstellen 35 z. B. durch Schweißen verbunden, so dass Unebenheiten zwischen den Verbindungsstellen 35 entstehen. Die Unebenheiten haben beispielsweise die Form einer Vielzahl von nebeneinander und übereinander angeordneten, vorzugsweise aufgeblasenen gewölbten Taschen 34, die miteinander in Verbindung stehen und durch die das Heizmedium fließt. Das heißt, dass sich natürlich auch auf der Produktseite Unebenheiten der Heizfläche, sowohl im Querschnitt als auch im Längsschnitt betrachtet, zwischen den Verbindungsstellen ergeben, wie insbesondere aus Fig. 4 und 5 hervorgeht. Durch die Ausbildung dieser Unebenheiten kann auch ein verbesserter Wärmeübergang auf die Maische erzielt werden wodurch wiederum die Temperatur des Heizmediums erniedrigt werden kann und sich natürlich auch die Rücklauftemperaturen weiter erniedrigen lässt.

Vorteilhafterweise ist die Heizung 30 derart ausgerichtet, dass, wie insbesondere aus Fig. 3 hervorgeht, in Flussrichtung des Heizmediums und/oder des flüssigen Mediums (entgegengesetzter Pfeilrichtung) einer gewölbten Tasche 34 eine Verbindungsstelle 35 folgt. Der Pfeil in Fig. 3 zeigt die bevorzugte Flussrichtung des Heizmediums, Somit entsteht in der Heizfläche eine sehr hohe Turbulenz des Heizmediums und ein hoher Wärmeübergangskoeffizient auf der Heizmittelseite. Die Stärke d2 der Heizfläche kann beispielsweise 0,4 bis 2 mm betragen, d1 kann in einem Bereich von 3 bis 10 mm liegen.

Gemäß der vorliegenden Erfindung ist die Heizung derart ausgelegt, dass das Heizmedium zumindest abschnittsweise, hier im unteren Abschnitt, derart in der Heizung 30 geführt wird, dass sie von oben nach unten, entgegen der durch das Rührwerk erzeugten Grundströmungsrichtung (von unten nach oben) fließt.

Wie aus Fig. 1 hervorgeht, umfasst in diesem konkreten Ausführungsbeispiel die Heizung einen Zulauf 14 für das Heizmedium, der im mittleren Bereich der Heizung 30 (in Richtung der Höhe betrachtet) angeordnet ist. Der Zulauf 14 kann beispielsweise eine Ringleitung um den Behälter 2 umfassen, und hier in Form eines Heizrohres (Halbrohrschlange) ausgebildet sein und kann eine oder mehrere über den Umfang verteilte Öffnungen aufweisen, über die das Heizmedium aus dem Rohr in die Heizung 30, hier die Hohlräume 37 (Fig. 3), geleitet wird. Das Heizrohr ist zumindest abschnittsweise um den Umfang der Seitenwandung 3 des Behälters 2 angeordnet.

Darüber hinaus umfasst die Heizung 30 einen Ablauf 15a für das Heizmedium im oberen Bereich der Heizung 30. Um den Umfang verteilt ist mindestens eine Öffnung in der Heizung vorgesehen, über die das Heizmedium aus den Hohlräumen 37 abgeleitet werden kann. Die Öffnung(en) stehen mit einer Leitung 41, hier einer Halbrohrschlange, in Verbindung, die zumindest abschnittsweise um den Umfang der Seitenwandung 3 des Behälters 2 angeordnet ist. Diese Ringleitung weist darüber hinaus ebenfalls mindestens eine Ableitung für das Heizmedium auf.

Vorteilhaft ist es wenn das Heizmedium gleichmäßig um den Umfang der Heizung 30 zu und abgeführt wird.

Ebenso ist mindestens ein Ablauf 15b im unteren Bereich der Heizung 30 vorgesehen, der, wie im Zusammenhang mit dem mindestens einen oberen Ablauf 15a beschrieben wurde, aufgebaut ist. Das bedeutet, dass das Wärmeträgermedium über den Zulauf 14 in die Heizung einlaufen kann und, wie durch die Pfeile dargestellt, bis nach oben und nach unten zu den entsprechenden Abläufen 15a, b fließt.

Die Heizung 30 erstreckt sich in diesem Ausführungsbeispiel bis in einen Bereich, der oberhalb der Spiegelfläche 20 der Maische liegt. Mit der erfindungsgemäßen Vorrichtung können auch sehr kleine Teilmaischemengen ohne Bodenheizung erwärmt werden. Es kann auch eine Bodenheizung vorgesehen sein, die ebenso wie die Zargenheizung, wie in Zusammenhang mit den Fig. 3 und 4 beschrieben wurde, aufgebaut ist. Eine solche Bodenheizung ist jedoch nicht zwingend notwendig. Es ist auch möglich, dass die Heizung sich nur bis in den Bereich der Spiegeloberfläche erstreckt.

Bei günstigen Oberflächen-zu-Volumenverhältnissen und kleinen Gefäßen, oder durch Nachheizen des Wärmeträgermediums, kann eventuell auch auf eine Heizfläche über der Spiegeloberfläche verzichtet werden.

In einem oberen Bereich der Heizung 30 oder über der Heizung 30 ist eine Verteilereinrichtung 8 vorgesehen, die die Maische oberhalb der Spiegeloberfläche 20 auf die Heizfläche 13 aufbringt, derart, dass die Maische über die Heizfläche 13 bis zur Spiegeloberfläche 20 der Maische herabläuft. Das obere Ende der Heizung bzw. die Verteilereinrichtung 8 sind dabei im Wesentlichen im oberen Viertel des Behälters 2 vorgesehen. Die Verteilereinrichtung kann innerhalb oder außen am Behälter angeordnet sein.

Die Anordnung der Heizflächen und deren Durchströmung mit einem Wärmeträgermedium kann natürlich auch in Kombination mit einer Dampf oder Hochdruckheißwasser beheizten Heizfläche erfolgen, oder man führt einem Wärmeträgermedium "Wasser" direkt Dampf zu und führt am Ende die entsprechende "Kondensatmenge" wieder ab.

Den gleichen Effekt kann man erreichen, indem man das Wärmeträgermedium vor Eintritt in die Heizflächen nachheizt. Dies ist z. B. bei der Produktion von Kochmaischen erforderlich, bei der die nötige treibende Kraft durch rückgewonnene Wärme oft nicht erreicht werden kann.

Bei dem in Fig. 1 gezeigten Ausführungsbeispiel ist die Verteilereinrichtung als ein Halbrohr ausgebildet, das um den äußeren Umfang des Behälters 2 läuft (selbiges kann sich aber auch auf der Innenseite der Behälterwandung befinden). Im Bereich des Halbrohrs sind um den Umfang der Seitenwandung gleichmäßig verteilte Durchbrüche 9 oder aber ein Ringspalt vorgesehen. Am oberen Ende der Öffnung 9 kann eine Umlenkeinrichtung, hier ein Umlenkblech 19 vorgesehen sein, das sich zumindest im Bereich der Öffnungen schräg lach unten erstreckt und die Maische zu der Heizfläche 13 lenkt.

Die im Behälter 2 befindliche Maische 28 kann so im Kreislauf aus dem unteren Bereich über die Pumpe 12 die Leitung 31 und 22 der Verteilereinrichtung 8 zugeführt werden, wobei die Maische dann über die Verteilereinrichtung 8 über die Heizfläche 13 in einem dünnen Strom rückgeführt wird.

Ferner kann die Vorrichtung einen Anschluss für Gas 27 aufweisen, derart, dass die Maischevorrichtung 1 mit Gas beaufschlagt werden kann. Die Vorrichtung kann auch eine nicht gezeigte Einrichtung zum Erzeugen eines Unterdrucks in der Vorrichtung aufweisen. Die Vorrichtung ist dann vorzugsweise als Druckbehälter ausgebildet.

Ferner kann die Vorrichtung auch eine Steuerung 40 aufweisen, die die Zufuhr einer maximalen Maischemenge bis zu einem maximalen Füllstand steuert, wobei sich die Heizfläche 13 über diesen maximalen Füllstand hinaus erstreckt. Weiter kann die Vorrichtung einen nicht dargestellten Füllstandsmesser und auch Temperaturfühler aufweisen. Die Steuerung 40 kann die Stellventile sowie die Pumpe ansteuern und auch die Heizmitteltemperatur vorzugsweise über eine Rücklaufbeimischung regeln. Die Vorlauftemperatur und damit einhergehend die Rücklauftemperatur, sollen so niedrig wie möglich sein um die oben aufgezeigten Vorteile möglichst optimal zu erreichen.

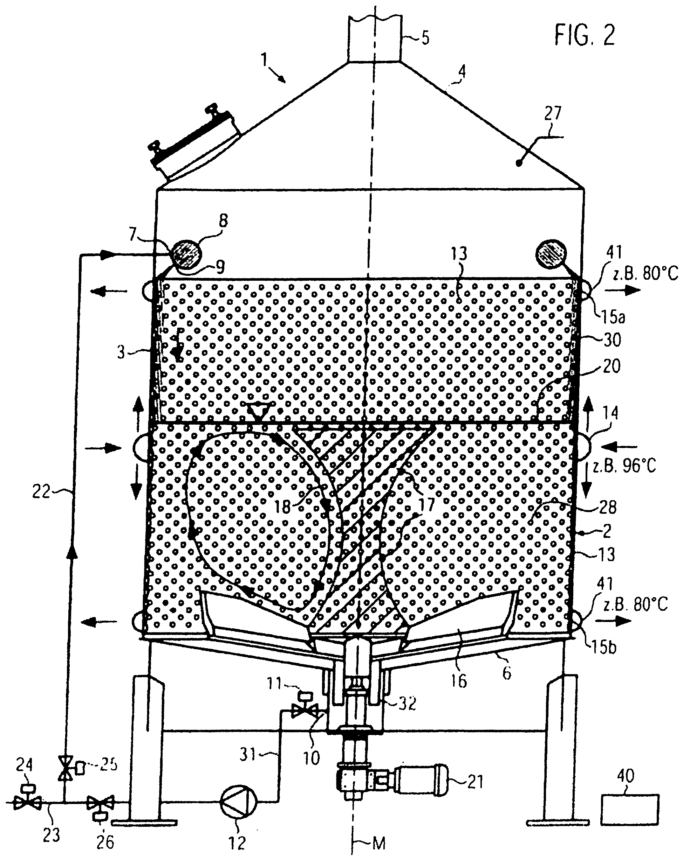

Fig. 2 zeigt eine mögliche zweite Ausführungsform der vorliegenden Erfindung, die der in Fig. 1 gezeigten Ausführungsform entspricht, mit der Ausnahme, dass die Verteilereinrichtung 8 hier nicht als außen an dem Behälter 2 angeordnete Halbrohrschlange ausgebildet ist, sondern als Ringrohr, das im Inneren des Behälters 3 angeordnet ist. Das Ringrohr weist dabei ebenfalls mehrere über den Umfang verteilte Durchbrüche 9 oder aber einen Ringspalt auf, wobei die Durchbrüche und/oder der Ringspalt derart angeordnet sind, dass die Maische auf die Heizfläche 13 aufgebracht wird und an dieser bis zur Spiegeloberfläche 20 herabläuft. Wenn auch nicht dargestellt, kann auch an der Ringleitung eine entsprechende Umlenkeinrichtung vorgesehen sein, die die Maische in Richtung Heizung 13 umlenkt. Die in Fig. 1 und Fig. 2 gezeigten Rohrschlangen bzw. Ringleitungen müssen nicht durchgängig ausgebildet sein sondern können auch aus mehreren Segmenten bestehen, die dann jeweils eine eigene Zuführleitung für Maische aufweisen.

Mit der Möglichkeit ein Produkt (neben Maische z. B. auch CIP-Reinigungsflüssigkeit) über der Heizfläche herunterlaufen lassen zu können, kann diese Vorrichtung auch als Heizung
oder Nachheizung für verschiedene Medien dienen, wobei die Nachheizung von z. B, der Sudhaus-CIP-Reinigungsflüssigkeit einen separaten Wärmetauscher einsparen kann und zusätzlich die rückgewonnene Energie aus dem Prozess verwendet werden kann (was wiederum Primärenergie einspart).

Die Erfindung ermöglicht auch den Bau von schlankeren, höheren und günstigeren Maischegefäßen (mit Füllständen von z. B. 3 bis 5 m und Gefäßhöhen von z. B, 5 bis 8 m bei Durchmessern von vorzugsweise 2 bis 6 m). Dies wiederum ermöglicht ein sehr gutes A/V-Verhältnis, womit sich die Abstrahlverluste reduzieren.

Nachfolgend wird das erfindungsgemäße Verfahren unter Bezugnahme auf die Fig. 1 näher erläutert.

Bei dem erfindungsgemäßen Verfahren wird zum Maischen zunächst Maische 28 in den Behälter 2 eingeleitet. Das kann beispielsweise zumindest teilweise über den Zulauf 7 und über die Verteilereinrichtung 8 erfolgen. Dabei sind die Ventile 24 und 25 geöffnet und Ventil 26 geschlossen. Das bedeutet, dass bereits beim Einleiten der Maische in den Behälter 2 die Maische als dünner Film, wie durch den Pfeil dargestellt, an der Heizungsoberfläche 13 nach unten läuft und erwärmt wird. Durch die Temperaturerhöhung der Maische vergrößern sich dabei Gasblasen in dem dünnen Film und können ausgetrieben werden. Zusätzlich nimmt die Viskosität an der wärmeren Grenzschicht ab, wodurch sich die Enzyme leichter lösen können und aktiver sind. Der Behälter 2 kann dabei über die Zufuhr 27 mit Gas, z. B. Stickstoff, beaufschlagt worden sein, Die Vorrichtung wird befüllt, bis ein bestimmter Füllstand erreicht ist. Die entsprechende Schaltung der Ventile etc. wird von der Steuereinrichtung 40 gesteuert. Die Heizung 30 wird hier mit einem Heizmedium, z. B. Wasser beheizt, das eine Temperatur vorzugsweise nahe Kochtemperatur aufweist, z. B. 96 °C. Wie zuvor beschrieben, verteilt sich das Heizmedium vom Zulauf 14 nach oben und unten in Richtung des mindestens einen Ablaufs 15a, b. Beim Verlassen der Heizung hat das Heizmedium dann beispielsweise eine Temperatur von 80 °C. Vorzugsweise beträgt die Vorlauftemperatur des Heizmediums 10 bis 30 K mehr als die jeweilige Produkttemperatur der Maische bzw. des zu erwärmenden Mediums. Das heißt, dass mit steigender Produkttemperatur die Heizmediumtemperatur derart geregelt wird, dass die Temperaturdifferenz zwischen Produkt und Heizmedium in einem Bereich von 10 bis 30 K liegt. Die Anordnung der Heizflächen und deren Durchströmung mit einem Wärmeträgermedium kann natürlich auch in Kombination mit einer Dampf oder Hochdruckheißwasser beheizten Heizfläche erfolgen, oder man führt einem Wärmeträgermedium "Wasser" direkt Dampf zu und führt am Ende die entsprechende "Kondensatmenge" wieder ab. Den gleichen Effekt kann man erreichen, indem man das Wärmeträgermedium vor Eintritt in die Heizflächen nachheizt. Dies ist z. B. bei der Produktion von Kochmaischen erforderlich, bei der die nötige treibende Kraft durch rückgewonnene Wärme oft nicht erreicht werden kann.

Aufgrund der vergrößerten Heizfläche, die sich auch oberhalb der Spiegelfläche 20 erstreckt bzw. aufgrund der Führung des Heizmediums im Gegenstrom, ist zum Beheizen der Maische kein Heißdampf mit üblichen 140 bis 150 °C nötig, so dass ein schonenderes Aufheizen bei geringeren Temperaturen (<140 °C) möglich ist, vorzugsweise unterhalb der Kochtemperatur des Heizmediums. Darüber hinaus ist es möglich, dass als Wärmemedium Heißwasser aus der Wärmerückgewinnung verwendet werden kann, d. h. Heizmedium, das durch Abwärme, die beispielsweise beim Würzekühlen und/oder am Pfannendunstkondensator anfällt, erwärmt wurde. Natürlich kann das durch die Abwärme erwärmte Heizmedium auch mittels eines Boosters auf höhere Temperaturen angehoben werden, um prozess- oder wochenbedingte Schwankungen auszugleichen.

In dem Fall, dass kein Hochdruckheißwasser verwendet wird, kann die Wandstärke d2 der Heizfläche 13 schwächer und dünner ausgelegt werden, was wiederum einen verbesserten Wärmeübergang mit sich bringt. Beispielsweise kann die Wandstärke d2 in einem Bereich von 0,4 bis 2 mm liegen. Dies wirkt sich auch positiv auf die Schweißarbeiten aus.

Die Maische 28 im Behälter 2 wird während des Maischprozesses zumindest zeitweise abgepumpt und im Kreislauf erneut über die Leitung 31, Pumpe 12 und Leitung 22 der Verteilereinrichtung 8 zugeführt. Über die Verteilereinrichtung 8 wird dann die Maische möglichst gleichmäßig um den Umfang des Behälters 2 verteilt auf die Heizfläche 13 aufgebracht und fließt als dünner Film/Strom in Richtung Spiegeloberfläche 20. Die Dicke des herablaufenden Films der Maische liegt in einem Bereich von vorzugsweise 1 bis 10 mm. Die Fördermenge der über die Verteilereinrichtung geführten Maische variiert in gleicher Weise aber in zusätzlicher Abhängigkeit mit dem Bottichdurchmesser.

Die Heizflächenvergrößerung reduziert die Problematik der viskositätsbedingten Erniedrigung des Wärmeübergangs bei höheren Konzentrationen (insbesondere bei Hammermühlenmaischen mit Stärketrägem wie Sorghum oder andere Rohfruchtrohstoffe) oder während der Verkleisterungsphase. Unter besonders günstigen Umständen kann hierdurch der sehr teure Einsatz von technischen Enzymen reduziert werden.

Wie auch im Zusammenhang mit dem Einlagern der Maische beschrieben, können Gaseinschlüsse durch die Temperaturerhöhung beim Herabfließen der Maische ausgetrieben werden. Oberflächennahe Gasblasen können einfach aufreißen. Beim Herablaufen der Maische können auch weitere flüchtige Stoffe wie DMS aus der Maische ausgetrieben werden. Die Maische kann hier besonders gut im Gegenstrom erwärmt werden, da wie durch die Pfeile in Fig. 1 hervorgeht, die Maische über die Heizfläche 13 nach unten fließt, während das Heizmedium, wie ebenfalls durch die Pfeile dargestellt ist, nach oben fließt. Das heißt, dass die Maische in einem Bereich oberhalb der eingelagerten Maische 28 zusätzlich erwärmt werden kann.

Im unteren Bereich der Vorrichtung wird die Maische über das Rührwerk 16 gerührt. Aufgrund der zusätzlichen Durchmischung durch die im Kreislauf geführte Maische kann das Rührwerk sehr viel kleiner dimensioniert werden und Scherkräfte können reduziert werden. Durch die Zugabe der Maische von der Verteilereinrichtung 8 aus verbessert sich die Durchmischung der Maische in den obersten Flüssigkeitsschichten relativ unabhängig vom Maischefüllstand.

Durch den von den Rührflügeln 16 bedingten Auftrieb, sowie durch den thermischen Auftrieb strebt die Maische an der Seitenwandung 3, wie durch den Pfeil dargestellt ist, nach oben. Maischeteilchen mit niedriger Dichte streben stärker nach oben und schwimmen dort sehr leicht auf. Die meisten Maischeteilchen wandern im oberen Flüssigkeitsbereich in Richtung Zentrum und von da an wieder nach unten, so dass sich der mit 18 bezeichnete Kreislauf ergibt. Im Bottichzentrum 17 befindet sich oft eine etwas "kältere" Maische. Die Homogenität der Maischetemperatur wird dadurch verbessert, dass ein Teil der Maische von unten, hier über die Auslaufschüssel 10, aus dem mittleren Bereich abgezogen wird und schließlich wieder auf die temperierte Heizfläche 13 gegeben wird. Dies verbessert die Enzymaktivität wesentlich. Aufgrund des hohen Volumenstroms in der Auslaufschüssel 10 kann man auf Rührblätter 32 in der Auslaufschüssel verzichten.

Im unteren Abschnitt, also unterhalb des Zulaufs 14, kann die Maische durch die Heizung 30, genauso wie im oberen Abschnitt, im Gegenstrom aufgeheizt werden, da hier die Maische an den Seitenwandungen bzw. der Heizfläche 13 nach oben steigt, wie durch die Pfeile dargestellt ist, während das Heizmedium nach unten fließt. In der Maische bzw. dem flüssigen Medium entsteht entlang der Heizfläche 13 also eine Grundströmung nach oben. Die Strömungsrichtungen der Grundströmung des flüssigen Mediums und des Heizmediums sind vorzugsweise etwa um 180° oder um 180 °- 200 ° entgegengesetzt. Der Wärmestrom kann somit wesentlich verbessert werden.

Die Menge der Maische, die im Kreislauf über die Leitung 22 der Verteilereinrichtung 8 aus dem unteren Bereich des Behälters 2 zugeführt wird, kann durch Einstellen der entsprechenden Stellventile sowie der Pumpleistung 12 eingestellt werden.

Am Ende des Maischvorgangs kann dann die Maische über den Ablauf 10 und die geöffneten Ventile 11, 26 sowie 24 über die Pumpe 12 abgepumpt werden. Hier wird die Maische über die Maischepumpe 12 sowohl abgepumpt als auch im Kreislauf gepumpt. Es können jedoch auch zwei unterschiedliche Pumpen vorgesehen sein.

Das zuvor beschriebene Maischverfahren kann wegen der niedrigen Heizmediumtemperaturen auch ohne striktes Einhalten der Rasten mit konstanter Temperatur durchgeführt werden. Die Aufheizrate während dieser Rast liegt dann bei z. B. 0,1 K/min. Hierbei wird das flüssige Medium, z.B. Maische mit einer vorbestimmten Heizrate z.B. 0,8 K/min, bis knapp vor die klassische Rasttemperatur aufgeheizt. Während der z. B. 20 minütigen Rast wird dann mit einer deutlich kleineren Heizrate, z. B. mit 0,1 K/min, weiter angeheizt", so dass die Temperatur des flüssigen Mediums am Ende der "Rast" etwas über der klassischen Rasttemperatur liegt, jedoch immer noch im Optimum des jeweiligen Enzymbereiches.

Die in Fig. 1 und 2 gezeigte Vorrichtung wurde im Zusammenhang mit einem Maischprozess beschrieben. Es ist jedoch ebenfalls möglich, diese Vorrichtung als Vorrichtung zum Erwärmen von anderen Medien, insbesondere Würze, zu verwenden. Statt der Maische 28 würde dann z. B. Würze über die Verteilereinrichtung 8 und auf die Spiegeloberfläche der Würze 20 geleitet.

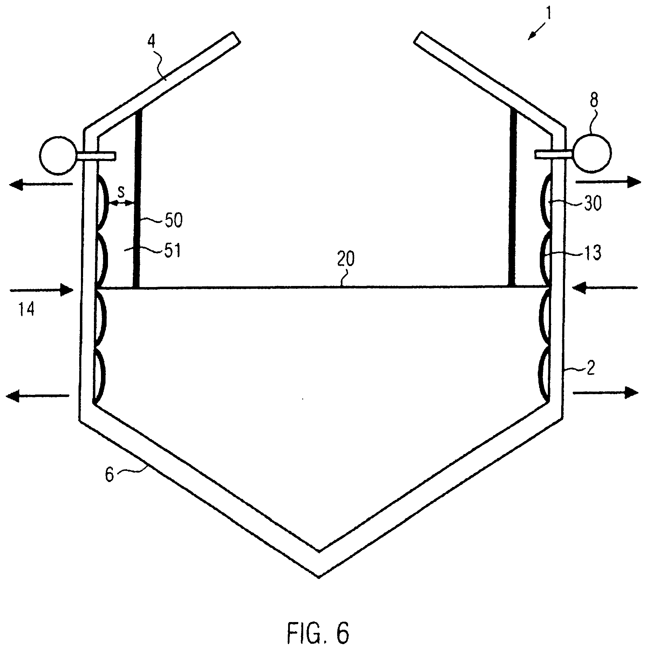

Fig. 6 zeigt eine Modifikation der in Fig. 1-5 gezeigten Ausführungsformen.

Fig. 6 zeigt eine mögliche Variante der in den Fig. 1 bis 5 dargestellten Ausführungsbeispiele. Die erfindungsgemäße Vorrichtung 1 ist dabei nur grob schematisch dargestellt. Das Ausführungsbeispiel entspricht den vorherigen Ausführungsbeispielen mit der Ausnahme, dass zusätzlich ein Begrenzungselement 50, hier in Form eines Begrenzungsblechs, vorgesehen ist. Bei dieser speziellen Ausführungsform ist das Begrenzungselement 50 derart ausgebildet, dass sich ein Spalt 51 zwischen der Heizfläche 13 und dem Begrenzungselement ergibt. Das Begrenzungselement 50 ist vorteilhafterweise so ausgebildet und angeordnet, dass sich ein Ringspalt ergibt. Der Ringspalt kann durchgängig sein oder aber aus mehreren ringförmig angeordneten Segmenten bestehen. Die Spaltbreite s beträgt 3 bis 20 mm. In einem unteren Bereich (in den unteren 5 bis 30 %) des Begrenzungselements 50 kann die Abmessung der Spaltbreite auf eine geringere Abmessung reduziert werden (also kurz bevor die herablaufende Maische in die restliche Maische hineinläuft, da hier eine geringe Gefahr der Sauerstoffaufnahme besteht).

Das Begrenzungselement 50 erstreckt sich zumindest von einem Bereich der auf einer Höhe liegt, auf der die Maische von der Verteilereinrichtung auf die Heizfläche 13 aufgebracht wird. So wird die Maische bereits unmittelbar beim Aufbringen auf die Heizfläche 13 von dem Begrenzungselement 50 nach unten geleitet. Das Begrenzungselement erstreckt sich nicht ganz bis zum Gefäßboden 6 sondern endet oberhalb, damit eine Zirkulation gewährleistet ist. Vorzugsweise endet das Begrenzungselement im Bereich der mittleren Heizmittelzuführung 14, um so das Gegenstromwärmetauscherprinzip, das im Zusammenhang mit den Fig. 1 und 2 beschrieben wurde, zu unterstützen. Das Begrenzungselement 50 kann also knapp oberhalb bzw. knapp unterhalb des Maischespiegels enden. Vorteilhafterweise ist die Länge des Begrenzungselements 50 derart ausgelegt, dass es in die Spiegeloberfläche 20 eintaucht.

Vorteile des Begrenzungselements ergeben sich aber auch noch, wenn das Begrenzungselement bis zu 20 cm oberhalb der Spiegeloberfläche endet (bei Bauhöhen von bevorzugt ca. 2,50 bis 8 m der Vorrichtung). Der Spalt bzw. Ringspalt 51 ist vorteilhafterweise nach oben verschlossen, so dass kein Gas aus dem Behälter 2 in den Ringspalt nachgezogen werden kann, wenn die Maische durch den Spalt 51 zur Spiegeloberfläche hin herabläuft. In Fig. 6 ist das Begrenzungselement 50 mit dem Deckel 4 verbunden. Das Begrenzungselement 50 kann auch als Heizung ausgebildet sein und eine nach außen, d. h. zur Außenwandung des Behälters 2 gewandte Heizfläche aufweisen. Dadurch kann die Maische zusätzlich beheizt werden. Vorteilhafterweise durchströmt dann das Heizmedium das Begrenzungselement von unten nach oben, um die Maische im Gegenstrom zu erwärmen. Bevorzugt kann die Heizfläche Unebenheiten aufweisen. Insbesondere, wenn das Begrenzungselement 50 als Heizfläche ausgebildet ist, kann es auch gemäß einer weiteren Ausführungsform zur verbesserten Erwärmung vorteilhaft sein, wenn es weiter in die Maische ragt, jedoch bis maximal etwa 50 cm oberhalb des Bodens.

Mit dem erfindungsgemäßen Begrenzungselement kann die herabfließende Maische entlang der Heizfläche 13 geleitet und in einem begrenzten Bereich gehalten werden. Somit kann einerseits ein etwaiger geringfügiger Sauerstoffeintrag weiter minimiert oder ganz verhindert werden und andererseits auch der Wärmeübergang verbessert werden. Durch den geringen Abstand des Begrenzungselements zur eigentlichen Heizfläche 13 bildet sich ein sehr schmaler Ringspalt, so dass sich schnell ein sauerstofffreier Raum bildet und die Maische vom Gasraum mehr oder weniger abgeschirmt ist. Das Begrenzungselement ermöglicht auch, dass die Maische im Wesentlichen tangential in den Behälter 2 eingebracht werden kann. Die Verteilereinrichtung ist dann als mindestens ein Tangentialzulauf ausgebildet, derart, dass die Maische im Wesentlichen tangential an die Innenseite der Behälterwand oder das Begrenzungselement angeströmt wird, so dass sich eine um die Mittelachse M drehende Abwärtsströmung ergibt.

Wie auch aus der vorherigen Beschreibung hervorgeht, dient die Erfindung dazu, ein flüssiges Heizmedium zu verwenden. Insbesondere eignet sich hier Heißwasser und. Hochdruckheißwasser. Somit kann die Vorrichtung mit einem Energiespeichertank verbunden sein, dem die Energie über beispielsweise einen Würzekühler und/oder Pfannendunstkondensator zugeführt wird.

Gerade bei flüssigen Heizmedien, insbesondere bei Heißwasser, ist das Gegenstromprinzip besonders vorteilhaft. Der hier zum Einsatz kommende Energiespeichertank wird während der Produktionszeit aus zurückgewonnener Energie gespeist. Somit wird zum Aufheizen des flüssigen Mediums keine Primärenergie mehr benötigt oder drastisch reduziert.

Zur Beheizung von Maisch- und Sudgefäßen kommen üblicherweise Dampf oder Hochdruckheißwasser (HDHW) als Heizmedien zum Einsatz. Bei Verwendung von Dampf müssen sich die Kondensatanschlüsse am tiefsten Punkt befinden, damit das Kondensat effektiv und vollständig ablaufen kann und nicht der Wärmestrom des Dampfes durch sich anstauendes Kondensat behindert wird. Der Dampfeintritt befindet sich im oberen Bereich der Heizfläche, muss aber nicht im höchsten Punkt angebracht sein, weil der Dampf sich dort hin bewegt, wo er kondensieren kann. Bei einem dampfbeheizten Wärmetauscher ist die Heizmitteltemperatur konstant und die gegenseitige Strömungsrichtung der zu erwärmenden Flüssigkeit und des Dampfes haben keinen Einfluss auf den Wärmeaustausch.

Bei einem Gegenstromwärmetauscher strömen die im Wärmeaustausch stehenden Flüssigkeiten beiderseits ihrer Trennwand in entgegengesetzter Richtung. Bei Verwendung von HDHW (Hochdruckheißwasser) sind die Anschlüsse für den Zulauf am tiefsten Punkt der Heizfläche angeordnet und die Rücklaufanschlüsse am höchsten Punkt. Diese Verfahrensweise ist nötig um eine saubere Entlüftung der Heizfläche sicherzustellen.

Die Grundströmung des flüssigen Mediums (z. B. Maische) in einem Rührapparat entlang der Heizfläche weist von unten nach oben.

Die Verwendung von Heißwasser als Heizmedium erfordert eine möglichst energetisch sinnvolle Konstruktion, da sich die Heizmitteltemperaturen während des Wärmeaustausches ändern.

Um einen möglichst hohen Energieeintrag in das flüssige Medium (z. B. Maische) zu realisieren ist eine Konstruktion der Heizfläche und der Heizmedienführung nach dem Gegenstromprinzip daher besonders effektiv und sinnvoll. Das Heißwasser wird also entgegen der Grundströmung des flüssigen Mediums von oben nach unten durch die Heizflächen geleitet. Da es sich jedoch bei Heißwasser wie bei HDHW um ein flüssiges Heizmedium handelt scheint diese Konstruktion zwar auf den ersten Blick nicht sinnvoll, da eine Entlüftung der Heizfläche durch die Medienführung nicht realisierbar scheint. Die konstruktive Verfahrensweise der Beheizung mit HDHW (nach dem Gleichstromprinzip) führt also im Wesentlichen weg von der Erfindung. Durch die besondere Konstruktion der erfindungsgemäßen Vorrichtung wird dieses Problem jedoch gelöst. Als Beispiel ermöglicht eine niedrige Fließgeschwindigkeit des Heizmittels in einer über den gesamten Umfang der Zarge angeordneten Ringleitung (Zulaufleitung) eine Entlüftung am höchsten Punkt. Von der Ringleitung führen z. B. viele kleine Durchgangsöffnungen in die eigentliche Heizfläche und ermöglichen eine vollständige und gleichmäßige Anströmung mit hoher Geschwindigkeit aufgrund des engen Spaltes zwischen den gegenüberliegenden Wandungen der Heizflächen. Besonders vorteilhaft ist es, wenn die Heizflächen mit Unebenheiten versehen sind. Sollten also trotz Entlüftung einmal Gaseinschlüsse in die Heizfläche gelangen, werden sie durch die hohe Strömungsgeschwindigkeit mitgerissen und unten ausgeschoben. Des Weiteren bildet sich durch die hohe Fließgeschwindigkeit auch eine turbulente Strömung in der Heizfläche aus, was einen Energieeintrag in das flüssige Medium weiter stark begünstigt.

Der Effekt dieser Verfahrensweise ist es, dass möglichst viel Energie an das flüssige Medium im Rührgefäß abgegeben wird und die Rücklauftemperatur des Heizmediums gleichzeitig in einem maximal tiefen Bereich (< 80 °C) liegt. Dies ist eine Grundvoraussetzung, wenn die am Würzekühler zurückgewonnene Energie zur Maischebeheizung eingesetzt werden soll.

Somit wird mit der erfindungsgemäßen Idee erstmals ein Wärmetauscher nach dem Gegenstromprinzip in einem Maisch- oder Sudgefäß mit flüssigem Heizmedium verwirklicht und durch die Konstruktion primär ein effektiver Energieeintrag in das flüssige Medium erzielt. Die Konstruktion ist daher in erster Linie energetisch bedingt und orientiert sich nicht wie bisher am Heizmedium und dessen sinnvoller Führung (Kondensatabführung, Entlüftung der Heizfläche) durch die Heizfläche.

Es ist auch möglich, die Teil- oder Gesamtanlage zur Maische- und/oder Würzeherstellung unter Druck zu setzen. Dadurch verschiebt sich das Temperaturniveau leicht nach oben, wobei Temperaturen z. B. des Heizmediums von 100 bis 110 °C, insbesondere 100 bis 105 °C, erreicht werden können.

## Patentansprüche

1. Vorrichtung zum Erwärmen eines flüssigen Mediums, insbesondere einer Maischvorrichtung (1) für die Bierherstellung mit
einem Behälter (2) und mit
einer Heizung (30) zum Beheizen des flüssigen Mediums, mit mindestens einem Zulauf (14) und mit mindestens einem Ablauf (15) für das Heizmedium
wobei die Heizung (30) derart ausgebildet ist, dass das Heizmedium zumindest abschnittsweise derart in der Heizung (30) geführt wird, dass es im wesentlichen entgegen einer im Behälter (2) an der Heizfläche (13) erzeugten Grundströmung (18) fließt, **dadurch gekennzeichnet, dass** der mindestens eine Zulauf (14) für das Heizmedium eine durchgehende oder in Abschnitte unterteilte Ringleitung umfasst und mehrere oder eine durchgehende Öffnung aufweist, durch die das Heizmedium aus der Ringleitung in die Heizung (30) fließt, wobei sich die Ringleitung ringförmig um die Heizung bzw. Heizfläche erstreckt.

2. Vorrichtung nach Anspruch 1, **dadurch gekennzeichnet, dass** die Vorrichtung ein Rührwerk (16) umfasst und das Heizmedium von oben nach unten entgegen der vom Rührwerk erzeugten Grundströmung (18) fließt.

3. Vorrichtung nach Anspruch 1 oder 2, **dadurch gekennzeichnet, dass** der mindestens eine Ablauf (15) eine durchgehende und/oder in Abschnitte unterteilte Ringleitung (41) umfasst und mehrere oder eine durchgehende Öffnung aufweist, durch die das Heizmedium aus dem Behälter in die Ringleitung fließt.

4. Vorrichtung nach mindestens einem der Ansprüche 1 bis 3, **dadurch gekennzeichnet, dass** ein Ablauf (15a) im oberen Bereich der Heizung (30) angeordnet ist und ein wei terer Ablauf (15b) im unteren Bereich der Heizung (30) und der Zulauf (14) dazwischen angeordnet ist.

5. Vorrichtung nach mindestens einem der Ansprüche 1 bis 4, **dadurch gekennzeichnet, dass** der Zulauf (14) für das Heizmedium auf einer Höhe angeordnet ist, die unterhalb des Zulaufs (7) für das flüssige Medium liegt.

6. Vorrichtung nach mindestens einem der Ansprüche 1 bis 5, **dadurch gekennzeichnet, dass** der Zulauf (7) für das flüssige Medium eine Verteilereinrichtung (8) im oberen Bereich umfasst, die das flüssige Medium auf die Heizfläche (13) der Heizung (30) aufbringt, derart, dass das flüssige Medium über die Heizfläche (13) herabläuft.

7. Vorrichtung nach mindestens einem der Ansprüche 1 bis 6, **dadurch gekennzeichnet,**
**dass** die nach innen gewandte Heizfläche (13) der Heizung (30) eine Vielzahl von Unebenheiten aufweist, insbesondere eine Vielzahl von nebeneinander und übereinander angeordneten gewölbten Taschen (34), die miteinander an einer Verbindungsstelle (35) in Verbindung stehen und durch die das Heizmedium fließt.

8. Vorrichtung nach Anspruch 7, **dadurch gekennzeichnet, dass** die Heizung (30) derart ausgebildet und angeordnet ist, dass in Flussrichtung des Heizmediums und/oder des flüssigen Mediums einer gewölbten Tasche (34) eine Verbindungsstelle (35) folgt.

9. Verfahren zum Erwärmen eines flüssigen Mediums insbesondere von Maische zur Bierherstellung mit folgenden Schritten:
- Einleiten des flüssigen Mediums in eine Vorrichtung zum Erwärmen des flüssigen Mediums,
- Erwärmen des flüssigen Mediums mit einer Heizung (30),
- Erzeugen einer Grundströmung (18) des flüssigen Mediums in dem Behälter (2) entlang einer Heizfläche (13), insbesondere durch Rühren,
- Ableiten des flüssigen Mediums aus der Vorrichtung,
wobei das Heizmedium zumindest abschnittsweise derart in der Heizung (30) geführt wird, dass es im Wesentlichen entgegen der erzeugten Grundströmung (18), vorzugsweise von oben nach unten, fließt, und das Heizmedium der Heizung (30) gleichmäßig um den Umfang der Heizung (30) verteilt zugeführt wird.

10. Verfahren nach Anspruch 9, **dadurch gekennzeichnet, dass** das Heizmedium der Heizung (30) gleichmäßig um den Umfang der Heizung (30) verteilt abgeführt wird.

11. Verfahren nach Anspruch 9 oder 10, **dadurch gekennzeichnet, dass** das Heizmedium zwischen einem oberen und unteren Ablauf (15) zugeführt wird.

12. Verfahren nach mindestens einem der Ansprüche 9 bis 11, **dadurch gekennzeichnet, dass** das Heizmedium auf einer Höhe zugeführt wird die unterhalb des Zulaufs (7) für das flüssige Medium liegt, oder besonders vorteilhaft in einem Bereich des maxi malen Pegels bzw. der Spiegelfläche des flüssigen Mediums, bzw. des biersortenabhängigen maximalen Pegels bzw. der Spiegelfläche des jeweiligen flüssigen Mediums.

13. Verfahren nach mindestens einem der Ansprüche 9 bis 12, **dadurch gekennzeichnet, dass** das flüssige Medium über eine Verteilereinrichtung (8) zugeführt wird, die das flüssige Medium oberhalb der Spiegeloberfläche (20) der Maische auf eine Heizfläche (13) der Vorrichtung aufbringt, derart, dass das flüssige Medium über die Heizfläche bis zur Spiegeloberfläche (20) des flüssigen Mediums herabläuft.

14. Verfahren nach mindestens einem der Ansprüche 9 bis 13, **dadurch gekennzeichnet, dass** das Heizmedium derart durch die Heizung fließt und/oder das flüssige Medium derart an der Heizfläche entlang strömt, dass nach einer gewölbten Tasche (34) eine Verbindungsstelle (35) über die die Taschen verbunden sind, folgt.

15. Verfahren nach mindestens einem der Ansprüche 9 bis 14, **dadurch gekennzeichnet, dass** das flüssige Medium aus einem unteren mittleren Bereich des Behälters (2) ab gepumpt und im Kreislauf in den Behälter (2) rückgeführt wird.

16. Verfahren nach mindestens einem der Ansprüche 9 bis 15, **dadurch gekennzeichnet, dass** die Vorlauftemperatur des flüssigen Heizmediums der Siedetemperatur des Heizmediums entspricht mit Schwankungen von 5 % oder kleiner ist als die Siedetemperatur, und das Heizmedium vorzugsweise Heißwasser oder Hochdruckheißwasser ist.

17. Vorrichtung nach mindestens einem der Ansprüche 1 bis 8, **dadurch gekennzeichnet, dass** die Vorrichtung und die Heizung für die Verwendung mit einem flüssigen Heizmedium insbesondere Heißwasser und Hochdruckheißwasser ausgelegt ist und vorzugsweise mit einem Energiespeichertank für flüssiges Heizmedium verbunden ist.

18. Vorrichtung nach Anspruch 17, **dadurch gekennzeichnet, dass** der Energiespeichertank aus einem Pfannendunstkondensator und/oder einem Würzekühler mit Energie gespeist wird.

## Claims

1. Device for heating a liquid medium, in particular a mashing device (1) for the production of beer having
a vessel (2) and having
a heater (30) for heating the liquid medium, having at least one inlet (14) and having at least one outlet (15) for the heating medium,
wherein the heater (30) is formed in such a manner that the heating medium is conducted at least in sections in the heater (30) in such a manner that it flows essentially counter to a base flow (18) generated in the vessel (2) at the heating surface (13) **characterized in that** the at least one inlet (14) for the heating medium comprises a continuous ring line or a ring line divided into sections and has a plurality of openings or one continuous opening, through which the heating medium flows out of the ring line and into the heater (30), wherein the ring line extends annularly around the heater or rather the heating surface.

2. Device according to Claim 1, **characterised in that** the device comprises an agitator (16) and the heating medium flows from the top down counter to the base flow (18) generated by the agitator.

3. Device according to Claim 1 or 2, **characterised in that** the at least one outlet (15) comprises a continuous ring line (41) or a ring line (41) divided into sections and has a plurality of openings or one continuous opening through which the heating medium flows out of the container and into the closed circuit.

4. Device according to at least one of the Claims 1 to 3, **characterised in that** an outlet (15a) is arranged in an upper area of the heater (30) and a further outlet (15b) is arranged in the lower area of the heater (30) and the inlet (14) is arranged between them.

5. Device according to at least one of the Claims 1 to 4, **characterised in that** the inlet (14) for the heating medium is arranged at a level that lies below the inlet (7) for the liquid medium.

6. Device according to at least one of the Claims 1 to 5, **characterised in that** the inlet (7) for the liquid medium comprises a distribution device (8) in the upper region that applies the liquid medium onto the heating surface (13) of the heater (30) in such a manner that the liquid medium runs down along the heating surface (13) until it reaches the surface level (20).

7. Device according to at least one of the Claims 1 to 6, **characterised in that**
the inwardly-facing heating surface (13) of the heater (30) has a multitude of unevennesses, particularly a multitude of arched pockets (34) arranged next to one another and above one another that are connected to one another at a joint (35) and through which the heating medium flows.

8. Device according to Claim 7, **characterised in that** the heater (30) is formed and arranged in such a manner that, in the flow direction of the heating medium and / or of the liquid medium, an arched pocket (34) is followed by a joint (35).

9. Method for heating a liquid medium, particularly mash for the production of beer, with the following steps:
- Introduction of the liquid medium into a device for heating the liquid medium,
- Heating of the liquid medium with a heater (30),
- Generation of a base flow (18) of the liquid medium in the container (2) along a heating surface (13), particularly by means of agitation,
- Drawing the liquid medium from the device,
wherein the heating medium is conducted in the heater (30) at least in sections in such a manner that it flows essentially counter to the generated base flow (18), preferably from the top down and the heating medium of the heater (30) is fed such that it is uniformly distributed around the circumference of the heater (30).

10. Method according to Claim 9, **characterised in that** the heating medium of the heater (30) is discharged such that it is uniformly distributed around the circumference of the heater (30).

11. Method according to Claim 9 or 10, **characterised in that** the heating medium is preferably fed between an upper and lower outlet (15).

12. Method according to at least one of the Claims 9 to 11, **characterised in that** the heating medium is fed at a level that lies below the inlet (7) for the liquid medium, or particularly advantageously in an area of the maximal level or of the surface level of the liquid medium, or of the maximal level that depends on the type of beer or of the surface level of the respective liquid medium.

13. Method according to at least one of the Claims 9 to 12, **characterised in that** the liquid medium is fed via a distribution device (8) that applies the liquid medium onto a heating surface (13) of the device above the surface level (20) of the mash in such a manner that the liquid medium runs down along the heating surface until it reaches the surface level (20) of the liquid medium.

14. Method according to at least one of the Claims 9 to 13, **characterised in that** the heating medium flows through the heater in such a manner and / or the liquid medium flows along the heating surface in such a manner that an arched pocket (34) is followed by a joint (35) by means of which the pockets are connected.

15. Method according to at least one of the Claims 9 to 14, **characterised in that** the liquid medium is pumped off from a lower middle area of the container (2) and recirculated back into the container (2).

16. Method according to at least one of the Claims 9 to 15, **characterised in that** the flow temperature of the liquid heating medium corresponds to the boiling temperature of the heating medium with deviations of 5 % or is less than the boiling temperature, and the heating medium is preferably hot water or high-pressure hot water.

17. Device according to at leastclaims 1-8, **characterised in that** the device and the heater are designed for use with a liquid heating medium, particularly hot water and high-pressure hot water, and preferably are connected to an energy storage tank for liquid heating medium.

18. Device according to Claim 17, **characterised in that** the energy storage tank is fed with energy from a kettle vapour condenser and / or a wort cooler.

## Revendications

1. Dispositif destiné à chauffer une substance liquide, notamment un dispositif d'empâtage (1) pour la fabrication de bière, comprenant
un réservoir (2) et comprenant
un dispositif de chauffage (30) qui est destiné à chauffer la substance liquide et possède au moins une entrée d'écoulement (14) et au moins une sortie d'écoulement (15) pour le fluide de chauffe,
le dispositif de chauffage (30) étant configuré de manière telle que le fluide de chauffe soit guidé, au moins par endroits, dans le dispositif de chauffage (30), de manière à s'écouler sensiblement à l'encontre d'un écoulement de base (18) produit dans le réservoir (2) sur la surface de chauffe (13),
**caractérisé en ce que** ladite au moins une entrée d'écoulement (14) pour le fluide de chauffe comprend une conduite annulaire continue ou subdivisée en tronçons, et présente plusieurs ouvertures ou une ouverture continue, par l'intermédiaire desquelles le fluide de chauffe s'écoule de la conduite annulaire dans le dispositif de chauffage (30), la conduite annulaire s'étendant de manière annulaire autour du dispositif de chauffage, à savoir de la surface de chauffage.

2. Dispositif selon la revendication 1, **caractérisé en ce que** le dispositif comporte un groupe remueur-mélangeur (16) et le fluide de chauffe s'écoule du haut vers le bas, à l'encontre de l'écoulement de base (18) produit par le groupe remueur-mélangeur.

3. Dispositif selon la revendication 1 ou la revendication 2, **caractérisé en ce que** ladite au moins une sortie d'écoulement (15) comprend une conduite annulaire (41) continue et/ou subdivisée en tronçons, et présente plusieurs ouvertures ou une ouverture continue, par l'intermédiaire desquelles le fluide de chauffe s'écoule du réservoir dans la conduite annulaire.

4. Dispositif selon l'une au moins des revendications 1 à 3, **caractérisé en ce qu'**une sortie d'écoulement (15a) est agencée dans la zone supérieure du dispositif de chauffage (30), et une autre sortie d'écoulement (15b) est agencée dans la zone inférieure du dispositif de chauffage (30), et l'entrée d'écoulement (14) est agencée entre les deux.

5. Dispositif selon l'une au moins des revendications 1 à 4, **caractérisé en ce que** l'entrée d'écoulement (14) pour le fluide de chauffe est agencée à une hauteur, qui se situe en-dessous de l'entrée d'écoulement (7) pour la substance liquide.

6. Dispositif selon l'une au moins des revendications 1 à 5, **caractérisé en ce que** l'entrée d'écoulement (7) pour la substance liquide comprend, dans la zone supérieure, un dispositif de distribution (8), qui applique la substance liquide sur la surface de chauffe (13) du dispositif de chauffage (30) de façon à ce que la substance liquide s'écoule vers le bas pardessus la surface de chauffe (13).

7. Dispositif selon l'une au moins des revendications 1 à 6, **caractérisé en ce que** la surface de chauffe (13) du dispositif de chauffage (30), qui est dirigée vers l'intérieur, présente un grand nombre d'irrégularités de planéité, notamment un grand nombre de cavités bombées (34) agencées côte à côte et les unes au-dessus des autres, et qui sont reliées mutuellement au niveau d'une zone de liaison (35), et au travers desquelles s'écoule le fluide de chauffe.

8. Dispositif selon la revendication 7, **caractérisé en ce que** le dispositif de chauffage (30) est configuré et agencé de manière à ce que dans la direction d'écoulement du fluide de chauffe et/ou de la substance liquide, une zone de liaison (35) succède à une cavité bombée (34).

9. Procédé destiné à chauffer une substance liquide, notamment une maische pour la fabrication de bière, comprenant les étapes suivantes :
- introduction d'une substance liquide dans un dispositif pour chauffer la substance liquide,
- échauffement de la substance liquide à l'aide d'un dispositif de chauffage (30),
- production d'un écoulement de base (18) de la substance liquide dans le réservoir (2), le long d'une surface de chauffe (13), notamment par remuage/agitation,
- évacuation de la substance liquide hors du dispositif,
procédé d'après lequel le fluide de chauffe est guidé, moins par endroits, dans le dispositif de chauffage (30), de manière à s'écouler sensiblement à l'encontre de l'écoulement de base (18) ayant été produit, de préférence du haut vers le bas, et le fluide de chauffe du dispositif de chauffage (30) est amené de manière régulièrement répartie autour de la périphérie du dispositif de chauffage (30).

10. Procédé selon la revendication 9, **caractérisé en ce que** le fluide de chauffe du dispositif de chauffage (30) est évacué de manière régulièrement répartie autour de la périphérie du dispositif de chauffage (30).

11. Procédé selon la revendication 9 ou la revendication 10, **caractérisé en ce que** le fluide de chauffe est amené entre une sortie d'écoulement supérieure et inférieure (15).

12. Procédé selon l'une au moins des revendications 9 à 11, **caractérisé en ce que** le fluide de chauffe est amené à une hauteur qui se situe en-dessous de l'entrée d'écoulement (7) pour la substance liquide, ou bien de manière particulièrement avantageuse dans la zone d'un niveau maximal, à savoir d'une surface de remplissage de la substance liquide, respectivement du niveau maximal dépendant du type de bière, à savoir de la surface de remplissage de la substance liquide respectivement considérée.

13. Procédé selon l'une au moins des revendications 9 à 12, **caractérisé en ce que** la substance liquide est amenée par l'intermédiaire d'un dispositif de distribution (8), qui amène la substance liquide au-dessus de la surface de remplissage (20) de la maische sur une surface de chauffe (13) du dispositif, de manière à ce que la substance liquide s'écoule vers le bas sur la surface de chauffe, jusqu'à la surface de remplissage (20) de la substance liquide.

14. Procédé selon l'une au moins des revendications 9 à 13, **caractérisé en ce que** le fluide de chauffe s'écoule au travers du dispositif de chauffage et/ou la substance liquide s'écoule le long de la surface de chauffe de manière à ce qu'à une cavité bombée (34) succède une zone de liaison (35) par laquelle les cavités sont reliées entre elles.

15. Procédé selon l'une au moins des revendications 9 à 14, **caractérisé en ce que** la substance liquide est évacuée par pompage au niveau d'une zone centrale inférieure du réservoir (2) et est recyclée en circuit dans le réservoir (2).

16. Procédé selon l'une au moins des revendications 9 à 15, **caractérisé en ce que** la température d'arrivée du fluide de chauffe liquide correspond à la température d'ébullition du fluide de chauffe avec des variations de 5%, ou bien est inférieure à la température d'ébullition, et le fluide de chauffe est de préférence de l'eau chaude ou de l'eau chaude haute-pression.

17. Dispositif selon l'une au moins des revendications 1 à 8, **caractérisé en ce que** le dispositif est configuré pour l'utilisation avec un fluide de chauffe liquide, notamment de l'eau chaude ou de l'eau chaude haute-pression, et est de préférence relié à un réservoir d'accumulation d'énergie pour fluide de chauffe liquide.

18. Dispositif selon la revendication 17, **caractérisé en ce que** l'accumulateur d'énergie est alimenté en énergie à partir d'un condenseur de vapeur de cuve et/ou d'un refroidisseur de moût.
